# EUROPEAN PATENT APPLICATION

(11) **EP 3 203 700 A1**
(43) Date of publication of application: **09.08.2017**
(21) Application number: 15854818.0
(22) Date of filing: 12.03.2015
(51) Int. Cl.: H04L 29/06, H04L 29/08

(54) **RDP DATA COLLECTION APPARATUS AND METHOD**

(30) Priority: 31.10.2014 CN 201410601734
(71) Applicant: Institute of Acoustics, Chinese Academy of Sciences, Haidian District Beijing 100190 (CN); Beijing Intellix Technologies Co. Ltd., Beijing 100190 (CN)
(72) Inventor: YE, Xiaozhou, Beijing 100190 (CN); FAN, Hao, Beijing 100190 (CN); CHENG, Weijia, Beijing 100190 (CN); ZHENG, Yanwei, Beijing 100190 (CN); YUAN, Ding, Beijing 100190 (CN); SONG, Lei, Beijing 100190 (CN)
(74) Representative: Hanna Moore + Curley
(86) International application number: PCT/CN2015/074083
(87) International publication number: WO 2016/065787

(57) **Abstract**

The present invention relates to an RDP data collection apparatus, comprising: an IP data forwarding module, an RDP processing module and an RDP log generation module. The IP data forwarding module is responsible for receiving a data packet in a network and forwarding the data packet processed by the IP data forwarding module. The RDP processing module is responsible for acquiring key information in an RDP session data transmission process and decrypting ciphertext data. The RDP log generation module is responsible for generating an RDP session log according to a certain rule and a certain data format.

## Description

### TECHNICAL FIELD

The present invention relates to the field of network communication, and in particular to the RDP data collection apparatus and method.

### BACKGROUND OF THE INVENTION

Remote Desktop Protocol (RDP) is a communication protocol proposed by Microsoft Corporation, which is mainly used to implement a multi-user mode under Windows operating system, access an application running on a Windows terminal server remotely, and separate the logic execution of the application from a user interface.

The server end describes a display output by using a video driver, constructs description information into a network data packet using the RDP protocol, and sends it to a client via a network; at the client, a video driver receives the description information, processes and displays the description information. In an input process, the mouse and keyboard messages at the client are conveyed from the client to the server end directly; at the server end, RDP receives these mouse and keyboard events using its own virtual mouse and keyboard drivers.

As a fact being gradually well-known in the industry of network information security at present, more than 75% of the losses caused by security events come from the interior, wherein the security events include unauthorized access, abuse and misoperation of the internal staff. By analyzing the sources that these internal security threats cannot be controlled effectively, the following major factors can be found: an ineffectively working or even no audit system, incomplete access authorization mechanism, imperfect separation mechanism of duties, the staff with insufficient security sense and skills and the like. Among the above, the lack of credible and complete audit system is the most severe and important original factor that is ubiquitous at present, and must be studied seriously.

The audit system helps to record a variety of sessions and events that occur in an important information system, including in a network, in a host operating system, and in an application system. These audit information reflects a basic trace of the operation of the information system. On the one hand, it helps a management layer and an auditor to audit whether the operation of the information system complies with requirements of the laws and regulations and security strategies of the organization. On the other hand, when a failure or a security accident occurs in the information system, the precious audit information, like a "black box" in an aircraft, helps an investigator to dig deeply into some intelligence behind the event, reestablish a process of the event until the cause of the event is analyzed and located completely, and further measures are deployed to avoid recurring of the loss.

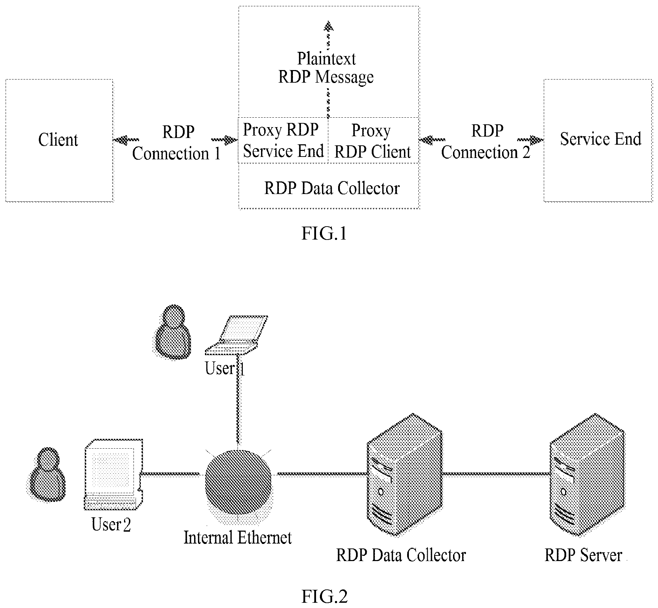

Before auditing, the audit system needs a data collection apparatus to provide basic data for audit. As shown in Fig. 1, when being at work, a RDP data collection apparatus in the prior art needs to establish a TCP connection with the service end and the client respectively, and then performs operations such as data collection, RDP decryption, RDP plaintext log generation, etc. The apparatus needs to maintain the information of the TCP connection for a long time at work, resulting in a large overhead of system resource.

### SUMMARY OF THE INVENTION

The objective of the present invention is to overcome the defects that the RDP data collection apparatus in the prior art needs to maintain the information of TCP connection for a long time and has a large overhead of system resource, thereby to provide a RDP data collection apparatus with small overhead of time and system resource.

In order to realize the above objective, the present invention provides a RDP data collection apparatus comprising: an IP data forwarding module, a RDP processing module and a RDP log generation module; wherein, the IP data forwarding module is responsible for receiving a data packet in a network, and forwarding the data packet processed by the IP data forwarding module itself; the RDP processing module is responsible for acquiring key information from a RDP session data transmission process and decrypting ciphertext data; the RDP log generation module is responsible for generating a RDP session log according to a certain rule and data format.

In the above technical solution, the IP data forwarding module, after receiving a datagram in the network, reassembles an IF packet, reassembles a TCP packet, and performs TCP retransmission processing on the data packet if being a retransmission packet; then judges a category of the datagram, submits a RDP data packet to the RDP processing module if the datagram is the RDP data packet, waits to receive the RDP data packet submitted by the RDP processing module after completing processing, and then forwards the RDP data packet to the network; otherwise forwards the datagram to the network directly if the datagram is not the RDP data packet.

In the above technical solutions, the processing of the RDP processing module to the RDP data packet is divided into: a RDP connection authentication phase and a RDP data transmission phase;

in the RDP connection authentication phase, the RDP processing module replaces an RSA public key of a service end with an RSA public key of the RDP data collection apparatus, and negotiates with a random string of a client and a random string of the service end to obtain an RC4 encryption key for the client and the service end in the data transmission phase; the RDP processing module also implements an identity authentication processing;

in the RDP data transmission phase, the RDP processing module copies data of the received RDP data packet, and then submits directly the original data to the IF data forwarding module for forwarding without any change; decrypts the copied data by the RC4 key, and then submits the decrypted data to the RDP log generation module for generating a RDP log.

In the above technical solutions, the RDP processing module replacing the RSA public key of the service end with the RSA public key of the RDP data collection apparatus comprises:

extracting the RSA public key of the service end sent by the RDP service end to the client, replacing the RSA public key of the service end with the RSA public key of the RDP data collection apparatus, the information of the replaced RSA public key of the service end being stored in an X.509 certificate or stored in a format given by RDP; and replacing a root certificate if the information of the RSA public key of the service end is stored in the X.509 certificate.

In the above technical solutions, the RDP processing module negotiating with the random string of the client and the random string of the service end to obtain an RC4 encryption key for the client and the service end in the data transmission phase comprises:
extracting random string information of the service end sent by the RDP service end to the client for key negotiation, and then sending it to the client;
extracting encrypted random string information sent by the RDP client to the service end for key negotiation, decrypting it with a private key of the RDP data collection apparatus to extract the random string of the client, then encrypting it with the RSA public key of the service end, and sending the encrypted random string of the client to the service end; and
negotiating with the random string of the client and the random string of the service end to obtain the RC4 encryption key for the client and the service end in the data transmission phase.

In the above technical solutions, the identity authentication processing is implemented by the following operations: extracting an identity authentication information field sent by the RDP client to the service end, decrypting it with the private key of the RDP data collection apparatus, and then encrypting it with the RSA public key of the service end followed by sending it to the service end.

In the above technical solutions, the RDP log generation module records a complete act of a user in a certain data format of a piece of log based on the data submitted by the RDP processing module according to a client operating-service end responding mode.

In the above technical solutions, the data format of the log comprises: log identification start bit of 1 byte, log length of 4 bytes, data of n bytes, and log identification end bit of 1 byte; wherein,

The content of data of n bytes employs a format of "Type-Length-Value", wherein, 1 byte represents the Type, 4 bytes represent the Length of the value, and m bytes represent the Value; the Type comprises: login time, port number of the client, IP address of the client, port number of the service end, IP address of the service end, data ID, session ID, domain name, login name, login password, extracted data type and extracted data.

The advantages of the present invention are in that:
firstly, the RDP data collection apparatus of the present invention, when performing data collection, does not use all of functions of the TCP/IP protocol stack, but only partial functions of IP reassembly, TCP reassembly and TCP retransmission in the TCP/IP protocol stack, greatly simplifying the processing of receiving and forwarding data packet and reducing the overhead of the processing time;
secondly, the RDP data collection apparatus of the present invention does not establish TCP connection with the client and the service end, does not need to maintain information of the TCP connection, saving the overhead of system resource;
finally, the generated RDP log can help a management layer and an auditor to audit whether the RDP login and operation of the user comply with the requirements of laws and regulations and security strategies of the organization; when a failure or a security accident occurs, the generated log can help an investigator to dig deeply into the event and reestablish a process of the event until the event is analyzed and located completely, and further measures are deployed to avoid failures and security accidents.

### BRIEF DESCRIPTION OF THE DRAWINGS

Fig. 1 is a schematic diagram of the communication process of a RDP data collection apparatus in the prior art;
Fig. 2 is a schematic diagram of the connection position of a RDP data collection apparatus of the present invention;
Fig. 3 is a functional module diagram of the RDP data collection apparatus of the present invention;
Fig. 4 is a flowchart of processing a data packet by various functional modules in the RDP data collection apparatus of the present invention;
Fig. 5 is a schematic diagram of the communication process of the RDP data collection apparatus of the present invention.

### DETAILED DESCRIPTION OF THE INVENTION

Now the present invention is further described in combination with the drawings.

As shown in Fig. 2, the RDP data collection apparatus of the present invention is located between a client and a service end. The apparatus can perform data collection from RDP session messages and generate a RDP session log for audit. The RDP data collection apparatus of the present invention does not employ a TCP/IP protocol stack, but processes datagrams of a transport layer (TCP) and an application layer (of various protocols) directly in a network layer in the process of data collection.

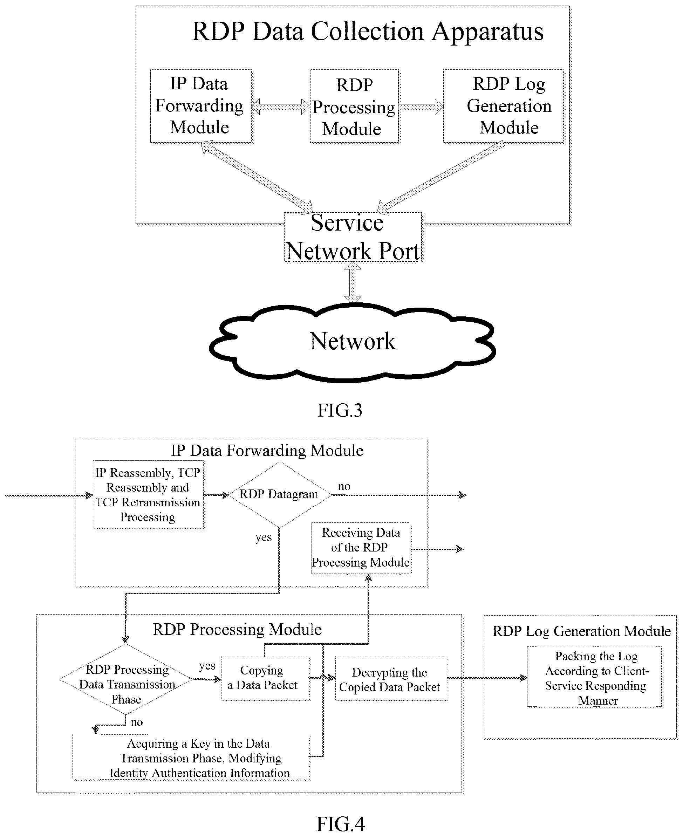

As shown in Fig. 3, the RDP data collection apparatus of the present invention comprises: an IP data forwarding module, a RDP processing module and a RDP log generation module. Among the above, the IF data forwarding module is responsible for receiving a data packet in a network, and forwarding the data packet processed by the IP data forwarding module itself; the RDP processing module is responsible for acquiring key information in a RDP session data transmission process and decrypting ciphertext data; the RDP log generation module is responsible for generating a RDP session log according to a certain rule and data format.

Below various modules in the RDP data collection apparatus of the present invention will be further explained in combination with Fig. 4.

The IP data forwarding module, after receiving a datagram in the network, reassembles an IP packet, reassembles a TCP packet, and performs TCP retransmission processing on the data packet if being a retransmission packet; then judges a category of the datagram, submits a RDP data packet to the RDP processing module if the datagram is the RDP data packet, waits to receive the RDP data packet submitted by the RDP processing module after completing the processing, and then forwards the RDP data packet to the network; otherwise forwards the datagram to the network directly if the datagram is not the RDP data packet.

The processing of the RDP processing module on the RDP data packet is divided into two phases: a RDP connection authentication phase and a RDP data transmission phase.

In the RDP connection authentication phase, the RDP processing module mainly implements two tasks: one is key acquisition, and the other is identity authentication processing.

The RDP processing module acquires a key by the following operations: extracting random string information and an RSA public key of the service end sent by the RDP service end to the client for key negotiation, and replacing the RSA public key of the service end with the RSA public key of the RDP data collection apparatus, wherein both of the RSA public key of the RDP data collection apparatus and the random string information of the service end will be forwarded to the client, and information of the replaced RSA public key of the service end may be stored in an X.509 certificate, or in a special data format given in RDP. If the information of the RSA public key of the service end is stored in the X.509 certificate, after replacing the public key, the RDP processing module needs to replace a root certificate, in order to satisfy the verification of the service end identity performed by the client. The RDP processing module extracts encrypted random string information sent by the RDP client to the service end for key negotiation, decrypts it with a private key of the RDP data collection apparatus to extract the random string of the client, then encrypts it with the RSA public key of the service end, and then sends the encrypted random string information of the client to the service end. Through the above operations of the RDP processing module, the service end, the client and the RDP processing module of the RDP data collection apparatus all have the random string of the client and the random string of the service end, and can negotiate with the random string of the client and the random string of the service end to obtain an RC4 encryption key of the client and service end for the data transmission phase.

The RDP processing module implements the identity authentication processing by the following operations: extracting an identity authentication information field sent by the RDP client to the service end, decrypting it with the private key of the RDP data collection apparatus, and then encrypting it with the RSA public key of the service end followed by sending it to the service end.

The RDP processing module submits the RDP data packet which has undergone RSA public key replacement and identity authentication processing as described above to the IF data forwarding module for forwarding. The RDP processing module relates to modifications to the datagram both in the key acquisition and the identity authentication processing operations, the modified datagram message authentication code needs to be recalculated.

In the RDP data transmission phase, the RDP processing module copies data of the received RDP data packet, then submits the original data directly to the IP data forwarding module for forwarding without any change; decrypts the copied data by the RC4 key, and then submits the decrypted data to the RDP log generation module for generating a RDP log.

The RDP log generation module records a complete act of a user into a piece of log based on the data submitted by the RDP processing module according to a client operating-service end responding mode. In the present embodiment, the content of the log format comprises: log identification start bit of 1 byte, log length of 4 bytes, data of n bytes, and log identification end bit of 1 byte. A data content of n bytes employs TLV (Type-Length-Value), i.e. Type of 1 byte, value length of 4 bytes, and value of m bytes. The type of the data comprises: login time, port number of the client, IP address of the client, port number of the service end, IP address of the service end, data ID, session ID, domain name, login name, login password, extracted data type and extracted data, etc. The generated RDP log can be buffered locally (the locally buffered data can be exported to an audit department for audit when needed), or can also be sent directly to a dedicated audit system for audit.

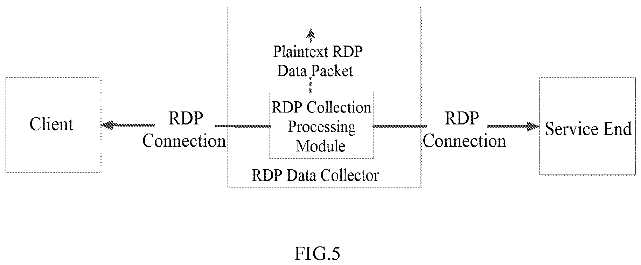

It can be found from comparation of Fig. 5 with Fig. 1, that the RDP data collection apparatus of the present invention does not establish a TCP connection with the client and the service end, thus the RDP data collection apparatus is equivalent to an intelligent switch, does not need to maintain the information of TCP connection, and can save the overhead of system resource effectively.

Finally, it should be explained that the aforementioned embodiments are merely used for illustrating, rather than limiting the technical solutions of the present invention. Although the present invention has been described in detail with reference to the embodiments, those skilled in the art will understand that modifications or equivalent substitutions can be made to the technical solutions of the present invention without departing from the scope and spirit of the technical solutions of the present invention, and thereby should all be encompassed within the scope of the claims of the present invention.

## Claims

1. A RDP data collection apparatus, **characterized in that**, comprising: an IP data forwarding module, a RDP processing module and a RDP log generation module; wherein the IP data forwarding module is responsible for receiving a data packet in a network, and forwarding the data packet processed by the IP data forwarding module itself; the RDP processing module is responsible for acquiring key information in a RDP session data transmission process and decrypting ciphertext data; the RDP log generation module is responsible for generating a RDP session log according to a certain rule and data format.

2. The RDP data collection apparatus according to claim 1, **characterized in that**, the IP data forwarding module, after receiving a datagram in the network, reassembles an IP packet, reassembles a TCP packet, and performs TCP retransmission processing on the data packet if being a retransmission packet; then judges a category of the datagram, submits a RDP data packet to the RDP processing module if the datagram is the RDP data packet, waits to receive the RDP data packet submitted by the RDP processing module after completing processing, and then forwards the RDP data packet to the network; otherwise forwards the datagram to the network directly if the datagram is not the RDP data packet.

3. The RDP data collection apparatus according to claim 1, **characterized in that**, the processing of the RDP processing module on the RDP data packet is divided into: a RDP connection authentication phase and a RDP data transmission phase;
in the RDP connection authentication phase, the RDP processing module replaces an RSA public key of a service end with an RSA public key of the RDP data collection apparatus, and negotiates with a random string of a client and a random string of the service end to obtain an RC4 encryption key for the client and the service end in the data transmission phase; the RDP processing module also implements an identity authentication processing;
in the RDP data transmission phase, the RDP processing module copies data of the received RDP data packet, and then submits directly the original data to the IF data forwarding module for forwarding without any change; decrypts the copied data by the RC4 key, and then submits the decrypted data to the RDP log generation module for generating a RDP log.

4. The RDP data collection apparatus according to claim 3, **characterized in that**, the RDP processing module replacing the RSA public key of the service end with the RSA public key of the RDP data collection apparatus comprises:
extracting the RSA public key of the service end sent by the RDP service end to the client, replacing the RSA public key of the service end with the RSA public key of the RDP data collection apparatus, information of the replaced RSA public key of the service end being stored in an X.509 certificate or stored in a format given by RDP; and replacing a root certificate if the information of the RSA public key of the service end is stored in the X.509 certificate.

5. The RDP data collection apparatus according to claim 3, **characterized in that**, the RDP processing module negotiating with the random string of the client and the random string of the service end to obtain an RC4 encryption key for the client and the service end in the data transmission phase comprises:
extracting random string information of the service end sent by the RDP service end to the client for key negotiation, and then sending it to the client;
extracting encrypted random string information sent by the RDP client to the service end for key negotiation, decrypting it with a private key of the RDP data collection apparatus to extract the random string of the client, then encrypting it with the RSA public key of the service end, and sending the encrypted random string of the client to the service end; and
negotiating with the random string of the client and the random string of the service end to obtain the RC4 encryption key for the client and the service end in the data transmission phase.

6. The RDP data collection apparatus according to claim 3, **characterized in that**, the identity authentication processing is implemented by the following operations: extracting an identity authentication information field sent by the RDP client to the service end, decrypting it with the private key of the RDP data collection apparatus, and then encrypting it with the RSA public key of the service end followed by sending it to the service end.

7. The RDP data collection apparatus according to claim 1, **characterized in that**, the RDP log generation module records a complete act of a user in a certain data format into a piece of log based on the data submitted by the RDP processing module according to a client operating-service end responding mode.

8. The RDP data collection apparatus according to claim 7, **characterized in that**, the data format of the log comprises: log identification start bit of 1 byte, log length of 4 bytes, data of n bytes, and log identification end bit of 1 byte; wherein,
a data content of n bytes employs a format of "Type-Length-Value", wherein, 1 byte represents the Type, 4 bytes represent the Length of the value, and m bytes represent the Value; the Type comprises: login time, port number of the client, IP address of the client, port number of the service end, IP address of the service end, data ID, session ID, domain name, login name, login password, extracted data type and extracted data.
